(19) Europäisches Patentamt
European Patent Office
Office européen des brevets

(11) **EP 3 323 839 B1**

(12) **EUROPEAN PATENT SPECIFICATION**

(45) Date of publication and mention
of the grant of the patent:
**11.11.2020  Bulletin 2020/46**

(51) Int Cl.:
*C08F 14/22* *(2006.01)*        *C08F 8/32* *(2006.01)*
*C08F 214/26* *(2006.01)*      *E21B 17/01* *(2006.01)*

(21) Application number: **16824405.1**

(22) Date of filing: **08.07.2016**

(86) International application number:
**PCT/JP2016/070288**

(87) International publication number:
**WO 2017/010425 (19.01.2017 Gazette 2017/03)**

(54) **FLUORORESIN AND MOLDED ARTICLE**

FLUORHARZ UND FORMKÖRPER

RÉSINE FLUORÉE ET ARTICLE MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2015   JP 2015140630**

(43) Date of publication of application:
**23.05.2018   Bulletin 2018/21**

(73) Proprietor: **Daikin Industries, Ltd.**
**Osaka-shi, Osaka 530-8323 (JP)**

(72) Inventors:
• **HOSODA, Kazuki**
  **Osaka-shi**
  **Osaka 530-8328 (JP)**
• **ICHIKAWA, Kenji**
  **Osaka-shi**
  **Osaka 530-8328 (JP)**
• **UCHIDA, Kazunobu**
  **Osaka-shi**
  **Osaka 530-8328 (JP)**
• **IWAMATSU, Yuuko**
  **Osaka-shi**
  **Osaka 530-8328 (JP)**
• **KUWAJIMA, Yuuki**
  **Osaka-shi**
  **Osaka 530-8328 (JP)**
• **TSUDA, Hayato**
  **Osaka-shi**
  **Osaka 530-8328 (JP)**
• **MASUI, Toshiaki**
  **Osaka-shi**
  **Osaka 530-8328 (JP)**

(74) Representative: **Hoffmann Eitle**
**Patent- und Rechtsanwälte PartmbB**
**Arabellastraße 30**
**81925 München (DE)**

(56) References cited:
EP-A1- 0 178 935        EP-A1- 1 270 209
EP-A1- 2 412 735        WO-A1-02/088227
WO-A1-2010/110129       WO-A1-2011/096371
WO-A2-2007/082867       JP-A- S6 198 709
JP-A- H09 183 812       JP-A- 2009 523 877

EP 3 323 839 B1

**Description**

The invention relates to fluororesins and molded articles.

BACKGROUND ART

Pipes used for offshore oil fields include risers (pipes for pumping up crude oil), umbilicals (integration of pipes for supplying chemicals for crude oil viscosity reduction for the purpose of controlling the pumping, power cables, and others), flowlines (pipes for transporting pumped crude oil which extend on the sea floor. They have various structures, and known pipes include metallic pipes and metal/resin hybrid pipes. In order to achieve weight reduction of pipes, use of metallic pipes tends to be reduced and metal/resin hybrid pipes are becoming the mainstream. Since oil drilling sites have become much deeper and thus the temperature of crude oil pumped therefrom rises, resins used for these pipes need to have better mechanical strength and chemical resistance at high temperatures (resistance to high-temperature crude oil, resistance to acidic gas, such as hydrogen sulfide, contained in crude oil at high temperatures, resistance to chemicals such as methanol, $CO_2$, and hydrogen chloride injected so as to reduce the crude oil viscosity at high temperatures), and lower permeability at high temperatures. Thus, there is a demand for materials which can take the place of polyamide (operating temperature range: up to 90°C) and polyvinylidene fluoride (operating temperature range: up to 130°C) which have been used for the pipes.

Patent Literature 1 discloses as a material suitable for riser pipes a fluororesin which is a copolymer containing copolymerized units of tetrafluoroethylene, vinylidene fluoride, and an ethylenically unsaturated monomer excluding tetrafluoroethylene and vinylidene fluoride, and has a specific storage elastic modulus.

Patent Literature 2 describes VDF-based curable fluoroelastomers having a glass transition temperature lower than -49°C, and having the following composition, as per cent by moles: A) from 25% to 50%, preferably from 30% to 45%, of the monomer of formula: $CF_2=CFOCF_2OCF_3$ (a); B) one or more (per)fluorinated comonomers having at least one unsaturation of ethylene type in amounts from 75% to 50%, preferably from 70% to 55%; said one or more comonomers comprising vinylidene fluoride (VDF) in amounts from 50% to 75% on the total of the monomer moles; the sum of the molar percentages of the monomers being 100%; said fluoroelastomers containing an amount of -COF end groups in the polymer lower than the sensitivity limit of the method reported in the document.

Patent Literature 3 relates to a fluororesin that has mechanical strength and chemical resistance, and low permeability at high temperature. The fluorine resin a copolymer that includes copolymerized units derived from tetrafluoroethylene, vinylidene fluoride, and an ethylenically unsaturated monomer other than tetrafluoroethylene and vinylidene fluoride.

Patent Literature 4 relates to a laminated resin molding which comprises a layer (A) comprising a polyamide-based resin composition and a layer (B) laminated to said layer (A), said layer (B) comprising a fluorine-containing ethylenic polymer having a carbonyl group, and said polyamide-based resin composition having a functional group, in addition to an amide group, selected from the group consisting of hydroxyl group, carboxyl group, ester group and sulfonamide group in a total amount of 0.05 to 80 equivalent percent relative to the amide group.

Patent Literature 5 relates to tetrafluoroethylene-perfluoro(alkyl vinyl ether) copolymers (TFE/FAVE copolymers) in which heat unstable carbinol end-groups (-$CH_2OH$ groups) present have been protected against heat degradation.

CITATION LIST

- Patent Literature

> Patent Literature 1: WO 2010/110129
> Patent Literature 2: WO 2007/082867 A2
> Patent Literature 3: EP 2 412 735 A1
> Patent Literature 4: EP 1 270 209 A1
> Patent Literature 5: EP 0 178 935 A1

SUMMARY OF INVENTION

- Technical Problem

Pipes for pumping from oil fields and resins for hydrogen tanks used in a high-temperature and high-pressure environment are required to have not only low permeability but also an ability to prevent defects such as blistering or cracking due to expansion of gas dissolved in the resin when the pipes and the resins are rapidly decompressed from a high pressure state.

In view of the above state of the art, the invention aims to provide a fluororesin that is less likely to suffer blistering or cracking even when rapidly decompressed from a high-temperature and high-pressure state.

- Solution to Problem

The invention relates to a fluororesin comprising a vinylidene fluoride unit, a tetrafluoroethylene unit and at least one ethylenically unsaturated monomer unit selected from the group consisting of ethylenically unsaturated monomer represented by the following formula (1):

$$CX^{11}X^{12}=CX^{13} (CX^{14}X^{15})_{n11}X^{16}$$

wherein $X^{11}$ to $X^{16}$ are the same as or different from each other, and are each H, F, or Cl; and $n^{11}$ is an integer of 0 to 8, excluding tetrafluoroethylene and vinylidene fluoride; and
ethylenically unsaturated monomer represented by the following formula (2):

$$CX^{21}X^{22}=CX^{23}\text{-}O (CX^{24}X^{25})_{n2}X^{26}$$

wherein $X^{21}$ to $X^{26}$ are the same as or different from each other, and are each H, F, or Cl; and $n^{21}$ is an integer of 0 to 8,
the vinylidene fluoride unit representing 10.0 to 49.9 mol% of all the monomer units constituting the fluororesin,
the tetrafluoroethylene unit representing 50.0 to 85.0 mol% of all the monomer units constituting the fluororesin,
the ethylenically unsaturated monomer unit representing 0.1 to 5.0 mol% of all the monomer units constituting the fluororesin,
the fluororesin having a melting point of 180-290°C and exhibiting a weight loss of 0.1% or less after heated at 300°C for two hours.

The invention also relates to a molded article formed from the above fluororesin.

- Advantageous Effects of Invention

Since the fluororesin of the invention has the aforementioned configuration, it is less likely to suffer blistering or cracking even when rapidly decompressed from a high-temperature and high-pressure state.

Since the molded article of the invention has the aforementioned configuration, it is less likely to suffer blistering or cracking even when rapidly decompressed from a high-temperature and high-pressure state.

DESCRIPTION OF EMBODIMENTS

The invention will be specifically described hereinbelow.

The fluororesin of the invention exhibits a weight loss of 0.1% or less after heated at 300°C for two hours. The upper limit of the weight loss is preferably 0.04%, while the lower limit thereof may be 0.001%, although not limited thereto. Since the fluororesin of the invention exhibits a small weight loss, it is less likely to suffer blistering or cracking even when rapidly decompressed from a high-temperature and high-pressure state.

The weight loss is determined by the following method.

An aluminum cup (diameter: 4 cm, height: 3 cm) is heated for five hours or longer in an electric furnace warmed up to 290°C, and then cooled down for 30 minutes or longer in a desiccator. The mass (W0) of this aluminum cup is accurately weighed to the 0.1 mg order. Then, 5.0000 ± 0.0100 g of fluororesin pellets are put into the aluminum cup and the total mass (W) is accurately weighed to the 0.1 mg order. The aluminum cup containing the fluororesin was put into an electric furnace equipped with a turntable (high-temperature forced convection oven FV450 special model equipped with turntable (Toyo Seisakusho Kaisha, Ltd.) warmed up to 300°C, and was heated at 300°C for two hours while rotated at 15 rpm. The heated aluminum cup containing the fluororesin is left to stand for one hour in a desiccator, and the total mass (W1) of the fluororesin and the aluminum cup is accurately weighed to the 0.1 mg order. Then, the weight loss is calculated by the following formula.

$$\text{Weight loss (\%): } (W - W1)/(W - W0) \times 100$$

The fluororesin of the invention also preferably has a weight loss determined by thermogravimetric/differential thermal analysis (TG-DTA) of 10.0 to 0.001%. The upper limit of the weight loss determined by the thermogravimetric/differential thermal analysis (TG-DTA) is preferably 8.0%, while the lower limit thereof is preferably 0.1%.

The weight loss determined by the thermogravimetric/differential thermal analysis (TG-DTA) can be obtained by the following method. Using TG-DTA6200 (Hitachi High-Technologies Corp.), 10 mg of fluororesin powder and pellets are heated up to a predetermined temperature in the air atmosphere, and maintained for 60 minutes. Then, the weight loss is determined at respective timings (e.g., 30 minutes after the heating or 60 minutes after the heating).

The fluororesin contains a vinylidene fluoride unit, a tetrafluoroethylene unit and at least one ethylenically unsaturated monomer unit selected from the group consisting of ethylenically unsaturated monomers represented by the following formula (1) and ethylenically unsaturated monomers represented by the following formula (2).

$$\text{Formula (1):} \qquad CX^{11}X^{12}=CX^{13}(CX^{14}X^{15})_{n11}X^{16}$$

In the formula, $X^{11}$ to $X^{16}$ are the same as or different from each other, and are each H, F, or Cl; and $n^{11}$ is an integer of 0 to 8. The ethylenically unsaturated monomers represented by the following formula (1) exclude tetrafluoroethylene and vinylidene fluoride.

$$\text{Formula (2):} \qquad CX^{21}X^{22}=CX^{23}\text{-}O(CX^{24}X^{25})_{n21}X^{26}$$

In the formula, $X^{21}$ to $X^{26}$ are the same as or different from each other, and are each H, F, or Cl; and $n^{21}$ is an integer of 0 to 8.

Preferred among the ethylenically unsaturated monomers represented by the formula (1) is at least one selected from the group consisting of $CF_2=CFCl$, $CF_2=CFCF_3$, those represented by the following formula (3):

$$CH_2=CF\text{-}(CF_2)_{n11}X^{16} \qquad (3)$$

(wherein $X^{16}$ and $n^{11}$ are defined as mentioned above), and those represented by the following formula (4):

$$CH_2=CH\text{-}(CF_2)_{n11}X^{16} \qquad (4)$$

(wherein $X^{16}$ and $n^{11}$ are defined as mentioned above);
more preferred is at least one selected from the group consisting of $CF_2=CFCl$, $CH_2=CFCF_3$, $CH_2=CH\text{-}C_4F_9$, $CH_2=CH\text{-}C_6F_{13}$, $CH_2=CF\text{-}C_3F_6H$, and $CF_2=CFCF_3$; and still more preferred is at least one selected from the group consisting of $CF_2=CFCl$, $CH_2=CH\text{-}C_6F_{i3}$, $CH_2=CF\text{-}C_3F_6H$, and $CH_2=CFCF_3$.

Preferred among the ethylenically unsaturated monomers represented by the formula (2) is at least one selected from the group consisting of $CF_2=CF\text{-}OCF_3$, $CF_2=CF\text{-}OCF_2CF_3$, and $CF_2=CF\text{-}OCF_2CF_2CF_3$.

In the fluororesin, the vinylidene fluoride unit represents 10.0 to 49.9 mol% of all the monomer units constituting the fluororesin, the tetrafluoroethylene unit represents 50.0 to 85.0 mol% of all the monomer units constituting the fluororesin, and the ethylenically unsaturated monomer unit represents 0.1 to 5.0 mol% of all the monomer units constituting the fluororesin. More preferably, the vinylidene fluoride unit represents 25.0 to 49.9 mol% of all the monomer units constituting the fluororesin, the tetrafluoroethylene unit represents 50.0 to 70.0 mol% of all the monomer units constituting the fluororesin, and the ethylenically unsaturated monomer unit represents 0.1 to 5.0 mol% of all the monomer units constituting the fluororesin.

The fluororesin of the invention is preferably a copolymer containing:

55.0 to 85.0 mol% of a copolymerized unit of tetrafluoroethylene;
13.0 to 44.9 mol% of a copolymerized unit of vinylidene fluoride; and
0.1 to 2.0 mol% of a copolymerized unit of an ethylenically unsaturated monomer represented by the formula (1).

In order not only to improve the mechanical strength of the fluororesin at high temperatures but also to enjoy particularly excellent low permeability of the fluororesin, the ethylenically unsaturated monomer represented by the formula (1) is preferably at least one monomer selected from the group consisting of $CH_2=CH\text{-}C_4F_9$, $CH_2=CH\text{-}C_6F_{13}$, and $CH_2=CF\text{-}C_3F_6H$. More preferably, the ethylenically unsaturated monomer represented by the formula (1) is at least one monomer selected from the group consisting of $CH_2=CH\text{-}C_4F_9$, $CH_2=CH\text{-}C_6F_{13}$, and $CH_2=CF\text{-}C_3F_6H$, and the fluororesin is a copolymer containing:

55.0 to 80.0 mol% of a copolymerized unit of tetrafluoroethylene;
19.5 to 44.9 mol% of a copolymerized unit of vinylidene fluoride; and

0.1 to 0.6 mol% of a copolymerized unit of an ethylenically unsaturated monomer represented by the formula (1).

The fluororesin of the invention may also be a copolymer containing:

58.0 to 85.0 mol% of a copolymerized unit of tetrafluoroethylene;
10.0 to 41.9 mol% of a copolymerized unit of vinylidene fluoride; and
0.1 to 5.0 mol% of a copolymerized unit of an ethylenically unsaturated monomer represented by the formula (1).

The fluororesin of the invention is more preferably a copolymer containing:

58.0 to 85.0 mol% of a copolymerized unit of tetrafluoroethylene;
14.5 to 39.9 mol% of a copolymerized unit of vinylidene fluoride; and
0.1 to 0.5 mol% of a copolymerized unit of an ethylenically unsaturated monomer represented by the formula (2).

The fluororesin of the invention is still more preferably a copolymer containing:

55.0 to 80.0 mol% of a copolymerized unit of tetrafluoroethylene;
19.8 to 44.8 mol% of a copolymerized unit of vinylidene fluoride;
0.1 to 2.0 mol% of a copolymerized unit of an ethylenically unsaturated monomer represented by the formula (1); and
0.1 to 0.3 mol% of a copolymerized unit of an ethylenically unsaturated monomer represented by the formula (2).

The fluororesin of the invention having this composition exhibits particularly excellent low permeability.
The fluororesin of the invention in which the amounts of the monomers fall within the above respective ranges has higher crystallinity and a higher storage elastic modulus at 170°C than conventionally known copolymers containing tetrafluoroethylene, vinylidene fluoride, and a third component. Thus, this fluororesin has excellent mechanical strength, chemical resistance, and low permeability, at high temperatures. The low permeability at high temperatures herein means the low permeability against fluids such as methane, hydrogen sulfide, $CO_2$, methanol, and hydrochloric acid.
The amounts of the respective monomers of the copolymer can be calculated as the amounts of the monomer units by appropriate combination of NMR and elemental analysis in accordance with the types of the monomers.
The fluororesin of the invention preferably has a melt flow rate (MFR) of 0.1 to 100 g/10 min, more preferably 0.1 to 50 g/10 min, still more preferably 0.1 to 10 g/10 min.
The MFR refers to the mass (g/10 min) of a polymer flowing out of a nozzle (inner diameter: 2 mm, length: 8 mm) per 10 minutes at 297°C and a 5-kg load using a melt indexer (Toyo Seiki Seisaku-sho, Ltd.) in conformity with ASTM D3307-01.
The fluororesin of the invention preferably has a melting point of 180°C to 290°C. The lower and upper limits thereof are more preferably 200°C and 270°C, respectively.
The melting point refers to the temperature corresponding to the peak on an endothermic curve obtained by thermal analysis at a temperature-increasing rate of 10°C/min using a differential scanning calorimeter RDC220 (Seiko Instruments Inc.) in conformity with ASTM D-4591.
The fluororesin of the invention preferably has a pyrolysis starting temperature (1% mass reduction temperature) of 360°C or higher. The lower limit thereof is more preferably 370°C. The upper limit of the pyrolysis starting temperature may be 410°C, for example, as long as it falls within the above range.
The pyrolysis starting temperature refers to the temperature at which 1 mass% of a fluororesin subjected to a heating test is decomposed, and is a value obtainable by measuring the temperature at which the mass of the fluororesin subjected to the heating test is reduced by 1 mass% using a thermogravimetric/differential thermal analyzer (TG-DTA).
The fluororesin of the invention preferably has a storage elastic modulus (E') of 60 to 400 MPa measured at 170°C by dynamic viscoelasticity analysis. Too low a storage elastic modulus at high temperatures may cause a rapid decrease in mechanical strength, possibly resulting in deformation. Too high a storage elastic modulus may cause too hard a resin which may possibly be difficult to mold.
The storage elastic modulus is a value determined at 170°C by dynamic viscoelasticity analysis. Specifically, the storage elastic modulus is a value determined on a sample having a length of 30 mm, width of 5 mm, and thickness of 0.25 mm using a dynamic viscoelasticity analyzer DVA220 (IT Keisoku Seigyo Co., Ltd.) in a tensile mode at a clamp width of 20 mm, a measurement temperature of 25°C to 250°C, a temperature-increasing rate of 2°C/min, and a frequency of 1 Hz. The storage elastic modulus (E') at 170°C is preferably 80 to 350 MPa, more preferably 100 to 350 MPa.
The measurement sample may be prepared by setting the molding temperature to a temperature higher than the melting point of the fluororesin by 50°C to 100°C, molding the material into a film having a thickness of 0.25 mm under a pressure of 3 MPa, and cutting the film into a size of 30 mm in length and 5 mm in width, for example.
In order to achieve excellent $CO_2$ barrier performance in a high-temperature environment, the fluororesin of the invention preferably has a $CO_2$ (carbon dioxide) permeability coefficient $P(CO_2)$ of $20 \times 10^{-9}$ cm$^3$·cm/cm$^2$·s·cmHg or lower at 150°C. The permeability coefficient $P(CO_2)$ is more preferably $15 \times 10^{-9}$ cm$^3$·cm/cm$^2$·s·cmHg or lower, still more preferably $13 \times 10^{-9}$ cm$^3$·cm/cm$^2$·s·cmHg or lower.

In order to achieve excellent $CH_4$ barrier performance in a high-temperature environment, the fluororesin of the invention preferably has a $CH_4$ (methane) permeability coefficient $P(CH_4)$ of $10 \times 10^{-9}$ cm$^3$·cm/cm$^2$·s·cmHg or lower at 150°C. The permeability coefficient $P(CH_4)$ is more preferably $5 \times 10^{-9}$ cm$^3$·cm/cm$^2$·s·cmHg or lower, still more preferably $3 \times 10^{-9}$ cm$^3$·cm/cm$^2$·s·cmHg or lower.

In order to achieve excellent blistering resistance in a high-temperature and high-pressure environment even with a large thickness, the fluororesin of the invention preferably has a ratio $D(CO_2)/S(CO_2)$ between a diffusion coefficient $D(CO_2)$ and a solubility coefficient $S(CO_2)$ of $CO_2$ of $3 \times 10^{-5}$ Pa·m$^2$/s or higher, more preferably $5 \times 10^{-5}$ Pa·m$^2$/s or higher, still more preferably $10 \times 10^{-5}$ Pa·m$^2$/s or higher, at 150°C.

In order to achieve excellent blistering resistance in a high-temperature and high-pressure environment even with a large thickness, the fluororesin of the invention preferably has a ratio $D(CH_4)/S(CH_4)$ between a diffusion coefficient $D(CH_4)$ and a solubility coefficient $S(CH_4)$ of $CH_4$ of $40 \times 10^{-5}$ Pa·m$^2$/s or higher, more preferably $45 \times 10^{-5}$ Pa·m$^2$/s or higher, and still more preferably $50 \times 10^{-5}$ Pa·m$^2$/s or higher, at 150°C.

The permeability coefficients $P(CO_2)$ and $P(CH_4)$, the diffusion coefficients $D(CO_2)$ and $D(CH_4)$, and the solubility coefficients $S(CO_2)$ and $S(CH_4)$ can be determined by photoacoustic detection. Specifically, these parameters can be determined by photoacoustic detection using WaSul-Perm system (Hilase) with $N_2$ flow on the detection side and the corresponding test gas flow on the test gas side.

The fluororesin of the invention preferably contains a $-CONH_2$ group at a main chain end. The presence of a -$CONH_2$ group at a main chain end leads to a peak assigned to the N-H bond in the $-CONH_2$ group at an absorption wavelength of 3400 to 3460 cm$^{-1}$ ($v_{N-H}$) in an infrared spectrum of the fluororesin obtained by infrared absorption spectrum analysis. The presence of the $-CONH_2$ group at a main chain end can be confirmed by checking the presence of this peak. The $-CONH_2$ group is a thermally stable end group.

The fluororesin preferably contains 20 or more $-CONH_2$ groups at a main chain end per $10^6$ main chain carbon atoms. The number of $-CONH_2$ groups is more preferably 30 or more. The upper limit thereof may be 500 or less, or may be 250 or less, although it is not limited thereto.

The number of $-CONH_2$ groups is calculated as follows. A 200-$\mu$m-thick film is subjected to infrared spectrum analysis and, in the resulting infrared absorption spectrum, the absorbance of the peak present at 2900 to 3100 cm$^{-1}$ assigned to the $CH_2$ groups in the main chain is standardized to 1.0. The absorbance A of the peak assigned to the N-H bonds in the $NH_2$ end groups present around 3400 to 3470 cm$^{-1}$ in this spectrum is then determined, and the number of the target groups is calculated by the following formula.

$$\text{Number of } -CONH_2 \text{ groups per } 10^6 \text{ carbon atoms in main chain} = 4258 \times A$$

The fluororesin preferably has an amide group ($-CONH_2$ group) index of 0.005 to 0.050, more preferably 0.010 to 0.045, still more preferably 0.015 to 0.040.

The amide group ($-CONH_2$ group) index of the fluororesin can be determined by the following method. Fragments of each powder (or pellets) of the fluororesin are compression molded at room temperature to provide a film having a thickness of 200 $\mu$m ($\pm$ 5 $\mu$m). Each of the resulting films is subjected to infrared spectrum analysis. In the analysis, the film is scanned 128 times using Perkin-Elmer Spectrum Ver. 3.0 and the resulting IR spectrum is analyzed, so that the peak absorbance is determined. The thickness of the film is measured using a micrometer. The absorbance of the peak present at 2900 to 3100 cm$^{-1}$ assigned to the $CH_2$ groups in the main chain in the infrared absorption spectrum is standardized to 1.0. The height of the peak assigned to the N-H bonds in the amide groups ($-CONH_2$) present around 3400 to 3470 cm$^{-1}$ in the standardized spectrum is defined as the amide group index.

The fluororesin preferably has a carbonate group index (ROCOO group index) of 0.000 to 0.050. The carbonate group index is more preferably 0.000 to 0.030. The carbonate group index is still more preferably 0.000 to 0.020.

The carbonate group (ROCOO group index) of the fluororesin can be determined by the following method. Fragments of each powder (or pellets) of the fluororesin are compression molded at room temperature to provide a film having a thickness of 200 $\mu$m ($\pm$ 5 $\mu$m). Each of the resulting films is subjected to infrared spectrum analysis. In the analysis, the film is scanned 128 times using Perkin-Elmer Spectrum Ver. 3.0 and the resulting IR spectrum is analyzed, so that the peak absorbance is determined. The thickness of the film is measured using a micrometer. The absorbance of the peak present at 2900 to 3100 cm$^{-1}$ assigned to the $CH_2$ groups in the main chain in the infrared absorption spectrum is standardized to 1.0. The height of the peak assigned to the C-O bonds in the carbonate groups (ROCOO groups) present around 1780 to 1830 cm$^{-1}$ in the standardized spectrum is defined as the carbonate group index.

The fluororesin preferably contains 0 to 40 unstable end groups at a main chain end per $10^6$ main chain carbon

atoms. The number of unstable end groups is more preferably 0 to 20, still more preferably 0.

The unstable end groups may include at least one selected from the group consisting of a -COF group, a -COOH group, a -COOCH$_3$ group, a -CF=CF$_2$ group, a -OH group, and a ROCOO- group. R in the ROCOO- group is preferably a linear or branched alkyl group, and this alkyl group may contain 1 to 15 carbon atoms.

The number of unstable end groups is calculated as follows. A 200-$\mu$m-thick film is subjected to infrared spectrum analysis and, in the resulting infrared absorption spectrum, the absorbance of the peak present at 2900 to 3100 cm$^{-1}$ assigned to the CH$_2$ groups in the main chain is standardized to 1.0. The absorbance A of the peak assigned to the unstable end groups present in this spectrum is then determined, and the number of the target groups is calculated by the following formula. The coefficients K are as shown in Table 1.

$$\text{Number of unstable end groups per } 10^6 \text{ carbon atoms in}$$
$$\text{main chain} = K \times A$$

[Table 1]

| Unstable end group | Position of absorption wavelength of peak (cm$^{-1}$) | Coefficient K |
|---|---|---|
| COF group | 1850 to 1910 | 3584 |
| COOH group | 1750 to 1850 | 4057 |
| COOCH$_3$ group | 1770 to 1810 | 3162 |
| CFCF$_2$ group | 1770 to 1810 | 3386 |
| OH group | 3610 to 3660 | 20677 |
| ROCOO group | 1780 to 1830 | 1265 |

The fluororesin of the invention may be produced by any of the following methods (1) to (3), for example.

The fluororesin can be produced by a method (Method (1)) including: polymerizing vinylidene fluoride in the presence of a polymerization initiator to provide a polymer; amidizing the polymer obtained by the polymerization; washing and drying the amidized polymer; melt-extruding the dried polymer to provide pellets; and heat-deaerating the resulting pellets.

The amidation can be achieved by bringing the polymer obtained by the polymerization into contact with a nitrogen compound that can generate ammonia water, ammonia gas, or ammonia. The amidation provides -CONH$_2$ groups at a polymer main chain end.

Adding ammonia water to the polymer obtained by the polymerization allows the polymer to contact with the ammonia water. The ammonia water may have an ammonia concentration of 0.01 to 28 mass%, and the contact time may be 1 minute to 24 hours. The number of -CONH$_2$ groups can be controlled by adjusting the concentration of and the contact time with ammonia water.

Contact between the polymer and ammonia gas may be achieved by, for example, putting the polymer into a reaction container and introducing ammonia gas into the reaction container. Ammonia gas may be mixed with a gas not reactive in the amidation before introduced into the reaction container.

The gas not reactive in the amidation may be any one, and examples thereof include nitrogen gas, argon gas, and helium gas. The ammonia gas preferably represents 1 mass% or more, more preferably 10 mass% or more, of the gas mixture. The proportion of the ammonia gas may be 80 mass% or less as long as it falls within the above range.

The amidation is preferably performed at 0°C or higher and 100°C or lower, more preferably 5°C or higher, still more preferably 10°C or higher, while more preferably 90°C or lower, still more preferably 80°C or lower. Too high an amidation temperature may cause decomposition of the polymer or other components, or may cause fusion of them. Too low an amidation temperature may cause long processing time, which is not preferred in terms of productivity.

The amidation time is typically 1 minute to 24 hours, although it is in accordance with the amount of the polymer.

The polymerization of vinylidene fluoride may be performed by solution polymerization, bulk polymerization, emulsion polymerization, or suspension polymerization, for example. In order to industrially facilitate the polymerization, emulsion polymerization or suspension polymerization is preferred, and suspension polymerization is more preferred.

The polymerization initiator may be an oil-soluble radical polymerization initiator or a water-soluble radical initiator.

The oil-soluble radical polymerization initiator may be a known oil-soluble peroxide. Typical examples thereof include dialkyl peroxycarbonates such as diisopropyl peroxydicarbonate, di-n-propyl peroxydicarbonate, and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di($\omega$-hydro-dodecafluoroheptanoyl)peroxide, di($\omega$-hydro-tetradecafluoroheptanoyl)peroxide, di($\omega$-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di($\omega$-chloro-hexafluorobutyryl)peroxide, di($\omega$-chloro-decafluorohexanoyl)peroxide, di(w-chloro-tetradecafluorooctanoyl)peroxide, $\omega$-hydro-dodecafluoroheptanoyl-w-hydro-hexadecafluorononanoyl-peroxide, $\omega$-chloro-hexafluorobutyryl-$\omega$-chloro-decafluorohexanoyl-peroxide, $\omega$-hydro-dodecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. A reducing agent such as a sulfite or a sulfurous acid salt may be used in combination with a peroxide, and the amount thereof may be 0.1 to 20 times the amount of the peroxide.

The polymerization initiator is preferably a dialkyl peroxycarbonate, and more preferably at least one selected from the group consisting of diisopropyl peroxydicarbonate, di-n-propyl peroxydicarbonate, and di-sec-butyl peroxydicarbonate.

In the polymerization, a surfactant, a chain-transfer agent, and a solvent may be used. Each of these additives may be conventionally known one.

The surfactant may be a known surfactant, and examples thereof include nonionic surfactants, anionic surfactants, and cationic surfactants. Preferred are fluorine-containing anionic surfactants, and more preferred are C4-C20 linear or branched fluorine-containing anionic surfactants optionally containing an ether-bond oxygen (in other words, an oxygen atom may be present between carbon atoms). The amount thereof (relative to the water as a polymerization medium) is preferably 50 to 5000 ppm.

Examples of the chain-transfer agent include hydrocarbons such as ethane, isopentane, n-hexane, and cyclohexane; aromatic substances such as toluene and xylene; ketones such as acetone; acetates such as ethyl acetate and butyl acetate; alcohols such as methanol and ethanol; mercaptans such as methyl mercaptan; and halogenated hydrocarbons such as carbon tetrachloride, chloroform, methylene chloride, and methyl chloride. The amount thereof may vary in accordance with the chain transfer constant of the compound used, and is usually 0.01 to 20 mass% relative to the polymerization solvent.

Examples of the solvent include water and solvent mixtures of water and an alcohol.

In the suspension polymerization, a fluorosolvent may be used in addition to water. Examples of the fluorosolvent include hydrochlorofluoroalkanes such as $CH_3CClF_2$, $CH_3CCl_2F$, $CF_3CF_2CCl_2H$, and $CF_2ClCF_2CFHCl$; chlorofluoroalkanes such as $CF_2ClCFClCF_2CF_3$ and $CF_3CFClCFClCF_3$; and perfluoroalkanes such as perfluorocyclobutane, $CF_3CF_2CF_2CF_3$, $CF_3CF_2CF_2CF_2CF_3$, and $CF_3CF_2CF_2CF_2CF_3$. Perfluoroalkanes are preferred. From the viewpoints of the suspension performance and economic efficiency, the amount of the fluorosolvent is preferably 10 to 100 mass% relative to the aqueous medium.

The water used for the polymerization solvent is preferably deionized water, and the electric conductivity thereof is preferably 10 $\mu$S/cm or lower and as low as possible. Too high an ion content may cause an unstable reaction rate. The fluorosolvent also preferably has a high purity and contains as small amounts of compounds containing acids or chlorine groups as possible in the production processes. Such compounds containing acid contents or chlorine may cause chain transfer, and thus minimization of these compounds is preferred to stabilize the polymerization rate and the molecular weight. It is also preferred that the other materials used in the polymerization (e.g., monomers such as vinylidene fluoride and tetrafluoroethylene, an initiator, and a chain-transfer agent) are those having a purity of 100% and containing no chain-transferable components. In order to stabilize the reaction rate and to adjust the molecular weight, a preparatory step for the reaction is preferably performed as follows: putting water into a vessel; performing an airtightness test while stirring the contents inside the vessel; reducing the pressure inside the vessel, slightly increasing the pressure with nitrogen, and reducing the pressure again in a repetitive manner; reducing the oxygen concentration in the vessel to as low as 1000 ppm or less and confirming this reduction; reducing the pressure again; and then putting the materials such as a fluorosolvent and monomers into the vessel to start the reaction.

In a step of recovering the remaining monomers after the reaction, the remaining monomers may polymerize to generate a low molecular weight product. Such generation of a low molecular weight product causes generation of smoke and die buildup during molding, and poor heat resistance of a molded article. In order to inhibit these problems, the temperature during the recovery is preferably decreased as low as possible so as to reduce the activity of the remaining initiator. Alternatively, putting hydroquinone or cyclohexane is also effective in stopping the reaction of the remaining monomers.

The polymerization temperature may be any temperature, and may be 0°C to 100°C. The polymerization pressure is appropriately determined in accordance with other polymerization conditions such as the type, amount, and vapor pressure of a solvent used, and the polymerization temperature. It may usually be 0 to 9.8 MPaG.

The washing and drying can be performed by known methods.

The pelletization by melt extrusion may be performed as appropriate at a temperature falling within the range of 200°C to 350°C.

Next, pellets obtained by melt extrusion are heat-deaerated. The heat-deaeration temperature preferably falls within the range of 160°C or higher to 250°C or lower. It more preferably falls within the range of 170°C or higher to 220°C or lower. It still more preferably falls within the range of 170°C or higher to 200°C or lower. The heat-deaeration time is preferably 3 hours or longer and 50 hours or shorter. It is more preferably 5 hours or longer and 20 hours or shorter. It still more preferably falls within the range of 8 hours to 15 hours.

The heat deaeration of the pellets can remove volatile matter attached to the surfaces of the pellets and contained inside the pellets. Examples of the volatile matter include initiator residues, HF and decomposition products of the polymer generated during melt extrusion in the pelletization. Examples of the decomposition products include oligomers represented by $H(CF_2)_{n13}$ (wherein $n^{13}$ is an integer of 4 to 30). It is important to remove such components by heat deaeration because they may cause problems with the long-term stability of, for example, mechanical strength when used for pipes, sheets, or packings to be used in severe environments such as high temperature and high pressure for a long period of time.

The heat deaeration may be performed with any equipment, and examples are the following: a system in which pellets are put into a stainless-steel vat and this vat is placed in a hot-blast electric furnace; a system in which a mesh with holes through which pellets do not pass and fall is placed on the bottom of a vat; a system in which a stainless-steel mesh is put on a vat; and a system in which pellets are put into a heat-resistant cylindrical container made of stainless steel, for example, and hot blasts with controlled temperatures are passed above and below the vat to maintain the inside temperature. Removal efficiency may be increased by changing the temperature of the heated pellets. An example of this is a method in which the pellets heated once is again molten so that the pelletization and the heating are repeated.

The fluororesin of the invention may also be produced by a production method (Method (2)) including: polymerizing vinylidene fluoride in the presence of a water-soluble radical polymerization initiator to provide a polymer; washing and drying the resulting polymer; melt-extruding the dried polymer to provide pellets; and heat-deaerating the resulting pellets.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. Any of reducing agents such as a sulfite or a sulfurous acid salt may be used in combination with a peroxide, and the amount thereof may be 0.1 to 20 times the amount of the peroxide.

For the method of polymerizing vinylidene fluoride, any of those described in Method (1) may be applied to Method (2) except that a water-soluble radical polymerization initiator is used as a polymerization initiator. For the methods of washing, drying, melt extrusion, and heat deaeration of the pellets in Method (2), any of those described in Method (1) may be applied to Method (2).

The fluororesin of the invention may also be produced by a production method (Method (3)) including: polymerizing vinylidene fluoride in the presence of an alkyl peroxy ester or a di(fluoroacyl)peroxide to provide a polymer; washing and drying the resulting polymer; melt-extruding the dried polymer to provide pellets; and heat-deaerating the resulting pellets.

The alkyl peroxy ester is preferably one represented by the following formula (5):

$$R^1\text{-O-O-C(=O)-}R^2$$

wherein $R^1$ and $R^2$ are the same as or different from each other, and are each an alkyl group.

$R^1$ and $R^2$ are each preferably a C1-C15 alkyl group.

The alkyl peroxy ester is preferably t-butyl peroxyisobutyrate or t-butyl peroxypivalate, more preferably t-butyl peroxypivalate.

The di(fluoroacyl)peroxide is preferably one represented by the following formula (6):

$$[\text{H-}R^3\text{-COO}]_2$$

wherein $R^3$ is a fluoroalkylene group.

$R^3$ is preferably a C1-C15 fluoroalkylene group.

Examples of the di(fluoroacyl)peroxide include di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(w-chloro-tetradecafluorooctanoyl)peroxide, ω-hydro-dodecafluoroheptanoyl-w-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The di(fluoroacyl)peroxide is preferably di(ω-hydro-dodecafluoroheptanoyl)peroxide (also known as di(7H-dodecafluoroheptanoyl)peroxide).

For the method of polymerizing vinylidene fluoride, any of those described in Method (1) may be applied to Method (3) except that an alkyl peroxy ester or a di(fluoroacyl)peroxide is used as a polymerization initiator. For the methods of washing, drying, melt extrusion, and heat deaeration of the pellets in Method (3), any of those described in Method (1) may be applied to Method (3).

The fluororesin of the invention may be in any form, such as an aqueous dispersion, powder, or pellets. It is preferably in the form of pellets.

The fluororesin of the invention can be molded into a variety of molded articles, and the resulting molded article has excellent characteristics such as mechanical strength and chemical resistance at high temperatures and low permeability at high temperatures. The molded article is less likely to suffer blistering or cracking even when rapidly decompressed from a high-temperature and high-pressure state.

The molded article may have any shape, such as a hose, a pipe, a tube, a sheet, a seal, a gasket, a packing, a film, a tank, a roller, a bottle, or a container. The molded article formed from the fluororesin of the invention is particularly preferably a pipe. The pipe is less likely to suffer blistering or cracking even when rapidly decompressed from a high-temperature and high-pressure state.

The fluororesin may be molded by any technique, and examples of the molding technique include compression molding, extrusion molding, transfer molding, injection molding, rotational molding, rotational lining, and electrostatic coating. Molding of the fluororesin of the invention into a pipe is preferably achieved by extrusion molding. The molding temperature is preferably 200°C to 350°C.

The fluororesin of the invention may be mixed, before molding, with any of components such as fillers, plasticizers, processing aids, release agents, pigments, flame retardants, lubricants, photostabilizers, weather-resistance stabilizers, conductive agents, antistatics, ultraviolet absorbers, antioxidants, blowing agents, flavors, oils, softening agents, and dehydrofluorinating agents. Examples of the fillers include polytetrafluoroethylene, mica, silica, talc, Celite, clay, titanium oxide, and barium sulfate. An example of the conductive agents is carbon black. Examples of the plasticizers include dioctyl phthalate and pentaerythritol. Examples of the processing aids include carnauba wax, sulfone compounds, low molecular weight polyethylene, and fluorine auxiliary agents. Examples of the dehydrofluorinating agents include organic onium compounds and amidines.

The fluororesin of the invention can suitably be used for pipes for transporting materials from the sea floor to the surface of the sea in an offshore oil field or a gas field. Examples of pipes used for offshore oil fields include risers (pipes for pumping up crude oil), umbilicals (integration of pipes for supplying chemicals for crude oil viscosity reduction for the purpose of controlling the pumping, power cables, and others), flowlines (pipes for transporting pumped crude oil which extend on the sea floor). For the structures thereof, metallic pipes and metal/resin hybrid pipes are known. The fluororesin of the invention can suitably be used for any of these pipes. Examples of the materials passing through pipes include fluids such as crude oil, petroleum gas, and natural gas.

The fluororesin of the invention can also suitably be used as an innermost or outermost coating or lining material for metal pipes for transporting fluids such as crude oil and natural gas whether in the ground, on the ground, or on the sea floor, for example. The purpose of coating or lining the innermost layer is to block carbon dioxide and hydrogen sulfide which are contained in crude oil and natural gas and cause corrosion of metal pipes to inhibit corrosion of metal pipes or to reduce the fluid friction due to highly viscous crude oil. The purpose of coating or lining the outermost layer is also to inhibit corrosion due to seawater or acidic water. In order to further improve the rigidity and strength of the fluororesin of the invention when the innermost or outermost surface is lined or coated with the fluororesin, glass fiber, carbon fiber, aramid resin, mica, silica, talc, Celite, clay, or titanium oxide may be added. In order to bond the fluororesin to metal, adhesive may be used or the metal surface may be roughened.

The fluororesin can also suitably used as a molding material for the following molded articles.

Examples of the molded articles include:

fluid transfer components for food manufacturing devices such as food packaging films, and lining materials, packings, sealants, and sheets for fluid transfer lines used in food manufacturing processes;

liquid chemical transfer components such as plugs for chemicals, packaging films, and lining materials, packings, sealant, and sheets for fluid transfer lines used in chemical manufacturing processes;

interior lining components for liquid chemical tanks and pipes of chemical plants and semiconductor plants;

fuel transfer components such as O-rings (square rings), tubes, packings, valve core parts, hoses, and sealants used in automobile fuel systems and peripheral components thereof, and hoses and sealants used in automobile AT devices;

other automobile components such as flange gaskets of carburetors, shaft seals, valve stem seals, sealants, and hoses used in automobile engines and peripheral components thereof, and brake hoses, air conditioner hoses, radiator hoses, and electric wire coating materials for automobiles;

liquid chemical transfer components for semiconductor devices such as O-rings (square-rings), tubes, packings, valve core parts, hoses, sealants, rolls, gaskets, diaphragms, and joints of semiconductor manufacturing devices;

coating and ink components such as coating rolls, hoses, tubes, and ink containers of coating equipment;

transfer components for foods and beverages, food packaging materials, and glass cooking appliances such as tubes, hoses, belts, packings, and joints, including tubes for foods and beverages or hoses for foods and beverages;

liquid-waste transfer components such as tubes and hoses for liquid-waste transfer;

high-temperature-liquid transfer components such as tubes and hoses for high-temperature-liquid transfer;

steam pipe components such as tubes and hoses for steam pipes;

anti-corrosive tapes for pipes such as tapes to be wrapped around pipes on decks of ships, for example;

various coating materials such as electric wire coating materials, optical fiber coating materials, transparent surface coating materials to be disposed on the light-incident surfaces of photovoltaic devices of solar cells, and agents for back surfaces;

sliding components such as diaphragms and various packings of diaphragm pumps;

weather-resistant covers such as agricultural films and a variety of roof materials and side walls;

interior materials used in the architecture field and coating materials for glass such as incombustible fireproof safety glass; and

lining materials such as laminate steel plates used in the electrical appliance field, for example.

Examples of the fuel transfer components used in automobile fuel systems include fuel hoses, filler hoses, and evaporator hoses. The fuel transfer components may also be used as fuel transfer components for fuels containing additives for gasoline, such as those having sour gasoline resistance, alcohol fuel resistance, methyl tertiary-butyl ether resistance, or amine resistance.

The chemical plugs and packaging films for chemicals have excellent chemical resistance against acids, for example. The liquid chemical transfer components may include anti-corrosive tapes to be wrapped around pipes in chemical plants.

Examples of the molded articles also include automobile radiator tanks, liquid chemical tanks, bellows, spacers, rollers, gasoline tanks, liquid-waste transfer containers, high-temperature-liquid transfer containers, fishery and pisciculture tanks.

Examples of the molded articles also include bumpers, door trims and instrument panels of automobiles, food processing devices, cooking appliances, water- and oil-repellent glass, illumination-related devices, indicator panels and housings of OA equipment, electric signboards, displays, liquid crystal displays, mobile phones, printed circuit boards, electric and electronic parts, miscellaneous goods, waste containers, bathtubs, bath modules, ventilation fans, and illumination frames.

A powdery coating formed from the fluororesin is also one of useful embodiments. The powdery coating may have an average particle size of 10 to 500 μm. The average particle size may be determined using a laser diffraction particle size distribution analyzer. Spraying the powdery coating on a base by electrostatic painting and sintering the sprayed powdery coating can provide a film that is less likely to suffer blistering or cracking even when rapidly decompressed from a high-temperature and high-pressure state.

EXAMPLES

The invention will be described below referring to, but are not limited to, examples.

The parameters in the examples were determined by the following methods.

(Monomer composition of fluororesin)

The composition of the fluororesin was determined by $^{19}$F-NMR at a measurement temperature of melting point of the polymer + 20°C using a nuclear magnetic resonance device AC300 (Bruker-Biospin), appropriately in combination with elemental analysis in accordance with the integral values of the respective peaks and the types of the monomers.

(Weight loss)

An aluminum cup (diameter: 4 cm, height: 3 cm) was heated for five hours or longer in an electric furnace warmed up to 290°C, and then cooled down for 30 minutes or longer in a desiccator. The mass (WO) of this aluminum cup was accurately weighed to the 0.1 mg order. Then, 5.0000 ± 0.0100 g of fluororesin pellets were put into the aluminum cup and the total mass (W) was accurately weighed to the 0.1 mg order. The aluminum cup containing the fluororesin was put into an electric furnace equipped with a turntable (high-temperature forced convection oven FV450 special model equipped with turntable (Toyo Seisakusho Kaisha, Ltd.) warmed up to 300°C, and was heated at 300°C for two hours while rotated at 15 rpm. The heated aluminum cup containing the fluororesin was left to stand for one hour in a desiccator, and the total mass (W1) of the fluororesin and the aluminum cup was accurately weighed to the 0.1 mg order. Then, the weight loss was calculated by the following formula.

$$\text{Weight loss (\%): } (W - W1)/(W - W0) \times 100$$

(Melting point)

The melting point was determined from the peak on an endothermic curve obtained by thermal analysis at a temperature-increasing rate of 10°C/min using a differential scanning calorimeter RDC220 (Seiko Instruments Inc.) in conformity with ASTM D-4591.

(Melt flow rate (MFR))

The MFR was defined as the mass (g/10 min) of a polymer flowing out of a nozzle (inner diameter: 2 mm, length: 8 mm) per 10 minutes at 297°C and a 5-kg load using a melt indexer (Toyo Seiki Seisaku-sho, Ltd.) in conformity with ASTM D3307-01.

(Pyrolysis starting temperature (1% mass reduction temperature))

The pyrolysis starting temperature was determined using a thermogravimetric/differential thermal analyzer TG-DTA6200 (Hitachi High-Technologies Corp.) with 10 mg of fluororesin powder and pellets. The fluororesin was heated at a rate of 10°C/min in the air atmosphere, and the temperature at which 1 mass% of the fluororesin subjected to the heating test was decomposed was defined as the pyrolysis starting temperature.

(Determination of the number of -$CONH_2$ groups (amide groups) in fluororesin)

Fragments of each powder (or pellets) of the fluororesin were compression molded at room temperature to provide a film having a thickness of 200 $\mu$m ($\pm$ 5 $\mu$m). Each of the resulting films was subjected to infrared spectrum analysis. In the analysis, the film was scanned 128 times using Perkin-Elmer Spectrum Ver. 3.0 and the resulting IR spectrum was analyzed, so that the peak absorbance was determined.
The thickness of the film was measured using a micrometer.
The absorbance of the peak present at 2900 to 3100 cm$^{-1}$ assigned to the $CH_2$ groups in the main chain in the infrared absorption spectrum was standardized to 1.0.
The absorbance of the peak assigned to the N-H bonds in the amide groups (-$CONH_2$) present around 3400 to 3470 cm$^{-1}$ in the standardized spectrum is determined. The base line is automatically decided, and the peak height A is defined as the peak absorbance. Based on the absorbance A of the peak assigned to the amide groups (-$CONH_2$), the number of amide groups per $10^6$ carbon atoms is calculated by the following formula.

$$\text{Number of amide groups per } 10^6 \text{ carbon atoms} = K \times A$$

A: absorbance of peak assigned to amide groups (-$CONH_2$)
K: coefficient = 4258

(Determination of amide group (-$CONH_2$ group index) of fluororesin)

Fragments of each powder (or pellets) of the fluororesin were compression molded at room temperature to provide a film having a thickness of 200 $\mu$m ($\pm$ 5 $\mu$m). Each of the resulting films was subjected to infrared spectrum analysis. In the analysis, the film was scanned 128 times using Perkin-Elmer Spectrum Ver. 3.0 and the resulting IR spectrum was analyzed, so that the peak absorbance was determined. The thickness of the film was measured using a micrometer. The absorbance of the peak present at 2900 to 3100 cm$^{-1}$ assigned to the CH$_2$ groups in the main chain in the infrared absorption spectrum was standardized to 1.0. The height of the peak assigned to the N-H bonds in the amide groups (-CONH$_2$) present around 3400 to 3470 cm$^{-1}$ in the standardized spectrum was defined as the amide group index.

(Determination of carbonate group (ROCOO group index) of fluororesin)

Fragments of each powder (or pellets) of the fluororesin were compression molded at room temperature to provide a film having a thickness of 200 $\mu$m ($\pm$ 5 $\mu$m). Each of the resulting films was subjected to infrared spectrum analysis. In the analysis, the film was scanned 128 times using Perkin-Elmer Spectrum Ver. 3.0 and the resulting IR spectrum was analyzed, so that the peak absorbance was determined. The thickness of the film was measured using a micrometer. The absorbance of the peak present at 2900 to 3100 cm$^{-1}$ assigned to the CH$_2$ groups in the main chain in the infrared absorption spectrum was standardized to 1.0. The height of the peak assigned to the C-O bonds in the carbonate groups (ROCOO groups) present around 1780 to 1830 cm$^{-1}$ in the standardized spectrum was defined as the carbonate group index.

(Weight loss determined by thermogravimetric/differential thermal analysis (TG-DTA))

Using a thermogravimetric/differential thermal analyzer TG-DTA6200 (Hitachi High-Technologies Corp.), 10 mg of fluororesin powder and pellets were subjected to the measurement. The fluororesin was heated up to a predetermined temperature in the air atmosphere, and maintained for 60 minutes. Then, the weight loss was determined at respective timings.

(Method of preparing sample for RGD testing)

The resulting pellets as a material were extrusion molded into a pipe sample having an outer diameter of 90 mm and a thickness of 6 mm, and the pipe was cut into a size of 2.5 cm $\times$ 5 cm. Thereby, a sample for RGD testing was obtained.

(RGD testing)

The sample for RGD testing was put into a pressure-resistant container. The pressure and the temperature therein were increased up to 15 kpsi and 150°C using a gas mixture of CO$_2$/CH$_4$ = 10%/90% and maintained until an equilibrium state for one week. Then, the pressure was reduced at a rate of 70 bar/min. The sample after the test without blistering or cracking passes the test.

(Headspace sampling GC/MS measurement)

First, 0.5 g of polymer powder or pellets was/were put into a 6-mL vial. The vial was sealed hermetically and heated at 200°C for 30 minutes. The gas phase was collected in a 2-mL syringe, and subjected to GC/MS (Agilent 5977A (Agilent Technologies, Inc.)).

GC/MS was performed under the following measurement conditions.
Column: DB-624
Column length: 60 m, inner diameter: 320 $\mu$m, thickness: 1.8 $\mu$m
Inlet temperature: 250°C
Flow rate: 1.4 mL/min
Oven temperature: initially 50°C and maintained for five minutes then increased up to 250°C at 10°C/min and maintained for five minutes to the end
Mass spectrometry: scanning with m/z = 10 to 600
Ionization: EI
Relative intensity: calculated on the basis of peak heights in MS chromatogram with m/z = 51

(Example 1)

A 3000-L autoclave was charged with 900 L of distilled water and sufficiently purged with nitrogen. Then, 674 kg of perfluorocyclobutane was put thereinto, and the temperature and stirring rate inside the system were respectively maintained at 35°C and 200 rpm. Next, 207 g of $CH_2=CHCF_2CF_2CF_2CF_2CF_3$, 62.0 kg of tetrafluoroethylene (TFE), and 18.1 kg of vinylidene fluoride (VDF) were successively put into the autoclave, and then 2.24 kg of a 50 mass% solution of di-n-propyl peroxydicarbonate (NPP) in methanol was added as a polymerization initiator so that the polymerization was started. At the same time of the polymerization start, 2.24 kg of ethyl acetate was put into the autoclave. The pressure inside the system decreased as the polymerization proceeded. Thus, a TFE/VDF gas monomer mixture (TFE/VDF: 60.2/39.8 (mol%)) was put into the autoclave and $CH_2=CHCF_2CF_2CF_2CF_2CF_3$ was simultaneously added in an amount of 1.21 parts relative to 100 parts of the gas mixture added so that the pressure inside the system was maintained at 0.8 MPa. The polymerization was finally stopped when the amount of the gas monomer mixture added reached 110 kg, and the pressure inside the autoclave was released to the atmospheric pressure. The resulting TFE/VDF/$CH_2=CHCF_2CF_2CF_2CF_2CF_3$ copolymer was brought into contact with 0.8 mass% ammonia water at 80°C for one hour, washed with water, and dried. Thereby, 102 kg of powder was obtained.

Next, the powder was melt-extruded through a $\phi$50-mm single screw extruder at a cylinder temperature of 290°C. Thereby, pellets were obtained. Next, the resulting pellets were heat-deaerated at 170°C for 10 hours.

The resulting pellets had the following composition and physical properties.
TFE/VDF/$CH_2=CHCF_2CF_2CF_2CF_2CF_3$ = 60.1/39.6/0.3 (mol%)
Melting point: 218°C
MFR: 1.7 g/10 min (297°C and 5 kg)
Pyrolysis starting temperature (1% mass reduction temperature): 388°C
Number of amide groups per $10^6$ carbon atoms: 97
Amide group index: 0.023
Carbonate group index: 0.008
Weight loss after heated at 300°C for two hours: 0.033%
Weight loss by TG-DTA after heated at 330°C for 30 minutes: 0.7%
Weight loss by TG-DTA after heated at 330°C for 60 minutes: 5.5%
RGD test: passed


(Example 2)


The same process was performed as in Example 1 except that, in the ammonia water contacting step in Example 1, the copolymer was brought into contact with 0.8 mass% ammonia water at 80°C for five hours.

The resulting pellets had the following composition and physical properties.
TFE/VDF/$CH_2=CHCF_2CF_2CF_2CF_2CF_3$ = 60.1/39.6/0.3 (mol%)
Melting point: 218°C
MFR: 1.7 g/10 min (297°C and 5 kg)
Pyrolysis starting temperature (1% mass reduction temperature): 390°C
Number of amide groups per $10^6$ carbon atoms: 102
Heat-deaeration conditions: 170°C for 10 hours
Amide group index: 0.024
Carbonate group index: 0.006
Weight loss after heated at 300°C for two hours: 0.013%
Weight loss by TG-DTA after heated at 330°C for 30 minutes: 0.1%
Weight loss by TG-DTA after heated at 330°C for 60 minutes: 0.8%
RGD test: passed


(Example 3)


A 174-L autoclave was charged with 52.2 L of distilled water and sufficiently purged with nitrogen. Then, 50.1 kg of perfluorocyclobutane was put thereinto, and the temperature and stirring rate inside the system were respectively maintained at 35°C and 200 rpm. Next, 13.0 g of $CH_2=CFCF_2CF_2CF_2H$, 3.68 kg of TFE, and 1.21 kg of VDF were successively put into the autoclave, and then 160.0 g of a 50 mass% solution of di-n-propyl peroxydicarbonate (NPP) diluted with methanol was added as a polymerization initiator so that the polymerization was started. At the same time of the polymerization start, 210.5 g of ethyl acetate was put into the autoclave. The pressure inside the system decreased as the polymerization proceeded. Thus, a TFE/VDF gas monomer mixture (TFE/VDF: 57.6.0/42.4 (mol%)) was put into the autoclave and $CH_2=CFCF_2CF_2CF_2H$ was simultaneously added in an amount of 0.5 parts relative to 100 parts of the gas mixture added so that the pressure inside the system was maintained at 0.8 MPa. The polymerization was finally stopped when the amount of the gas monomer mixture added reached 25.0 kg. The resulting TFE/VDF/$CH_2=CFCF_2CF_2CF_2H$ copolymer was brought into contact with 0.8 mass% ammonia water at 80°C for five hours, washed with water, and dried. Thereby, 24.2 kg of powder was obtained.

Next, the powder was melt-extruded through a $\phi$50-mm single screw extruder at a cylinder temperature of 290°C. Thereby, pellets were obtained. Next, the resulting pellets were heat-deaerated at 170°C for 10 hours.

The resulting pellets had the following composition and physical properties.

TFE/VDF/CH$_2$=CF(CF$_2$)$_3$H = 57.5/42.3/0.2 (mol%)

Melting point: 212°C

MFR: 3.3 g/10 min (297°C and 5 kg)

Pyrolysis starting temperature (1% mass reduction temperature): 388°C

Amidation conditions: 0.8% ammonia water at 80°C for five hours

Number of amide groups per $10^6$ carbon atoms: 125

Amide group index: 0.029

Carbonate group index: 0.010

Heat-deaeration conditions: 170°C for 10 hours

Weight loss after heated at 300°C for two hours: 0.025%

Weight loss by TG-DTA after heated at 330°C for 30 minutes: 0.2%

Weight loss by TG-DTA after heated at 330°C for 60 minutes: 0.9%

RGD test: passed

(Comparative Example 1)

The copolymer obtained by the polymerization in Example 1 was subjected to heat deaeration at 150°C for 12 hours without ammonia treatment.

TFE/VDF/CH$_2$=CHCF$_2$CF$_2$CF$_2$CF$_2$CF$_3$ = 60.1/39.6/0.3 (mol%)

Melting point: 218°C

MFR: 1.7 g/10 min (297°C and 5 kg)

Pyrolysis starting temperature (1% mass reduction temperature): 372°C

Number of amide groups per $10^6$ carbon atoms: 0

Deaeration conditions: 150°C for 12 hours

Amide group index: 0

Carbonate group index: 0.078

Weight loss after heated at 300°C for two hours: 0.643%

Weight loss by TG-DTA after heated at 330°C for 30 minutes: 2.5%

Weight loss by TG-DTA after heated at 330°C for 60 minutes: 15.4%

RGD test: blistering

(Example 4)

The pellets obtained in Example 2 were subjected to headspace sampling GC/MS.

Peaks assigned to volatile oligomers H(CF$_2$)$_n$H (n = 4 to 18) appeared at 5.4 to 18.0 minutes.

(Example 5)

The same process was performed as in Example 1 except that, in the ammonia water contacting step in Example 1, the copolymer was brought into contact with 0.4 mass% ammonia water at 80°C for five hours.

The resulting pellets had the following composition and physical properties.

TFE/VDF/CH$_2$=CHCF$_2$CF$_2$CF$_2$CF$_2$CF$_3$=60.1/39. 6/0.3 (mol%)

Melting point: 218°C

MFR: 1.7 g/10 min (297°C and 5 kg)

Pyrolysis starting temperature (1% mass reduction temperature): 385°C

Number of amide groups per $10^6$ carbon atoms:89

Amide group index: 0.020

Carbonate group index: 0.015

Heat-deaeration conditions: 170°C for 10 hours

Weight loss after heated at 300°C for two hours: 0.035%

Weight loss by TG-DTA after heated at 330°C for 30 minutes: 1.1%

Weight loss by TG-DTA after heated at 330°C for 60 minutes: 6.7%

RGD test: passed

**Claims**

1. A fluororesin comprising a vinylidene fluoride unit, a tetrafluoroethylene unit and at least one ethylenically unsaturated monomer unit selected from the group consisting of ethylenically unsaturated monomer represented by the following formula (1):

$$CX^{11}X^{12}=CX^{13}(CX^{14}X^{15})_{n11}X^{16}$$

wherein $X^{11}$ to $X^{16}$ are the same as or different from each other, and are each H, F, or Cl; and $n^{11}$ is an integer of 0 to 8, excluding tetrafluoroethylene and vinylidene fluoride; and
ethylenically unsaturated monomer represented by the following formula (2):

$$CX^{21}X^{22}=CX^{23}\text{-}O(CX^{24}X^{25})_{n21}X^{26}$$

wherein $X^{21}$ to $X^{26}$ are the same as or different from each other, and are each H, F, or Cl; and $n^{21}$ is an integer of 0 to 8, the vinylidene fluoride unit representing 10.0 to 49.9 mol% of all the monomer units constituting the fluororesin, the tetrafluoroethylene unit representing 50.0 to 85.0 mol% of all the monomer units constituting the fluororesin, the ethylenically unsaturated monomer unit representing 0.1 to 5.0 mol% of all the monomer units constituting the fluororesin, the fluororesin having a melting point of 180-290°C and exhibiting a weight loss of 0.1% or less after heated at 300°C for two hours, wherein the weight loss and the melting point are determined in accordance with the methods described in the specification.

2. A molded article formed from the fluororesin according to claim 1.

**Patentansprüche**

1. Fluorharz, umfassend eine Vinylidenfluorideinheit, eine Tetrafluorethyleneinheit und mindestens eine ethylenisch ungesättigte Monomereinheit, ausgewählt aus der Gruppe, bestehend aus durch die folgende Formel (1) dargestellten ethylenisch ungesättigtem Monomeren:

$$CX^{11}X^{12}=CX^{13}(CX^{14}X^{15})_{n11}X^{16}$$

worin $X^{11}$ bis $X^{16}$ gleich oder voneinander verschieden sind und jeweils H, F oder Cl sind; und $n^{11}$ eine ganze Zahl von 0 bis 8 ist, ausgenommen Tetrafluorethylen und Vinylidenfluorid; und
durch die folgende Formel (2) dargestellten ethylenisch ungesättigten Monomeren:

$$CX^{21}X^{22}=CX^{23}\text{-}O\ (C^{24}X^{25})_{n21}X^{26}$$

worin $X^{21}$ bis $X^{26}$ gleich oder verschieden voneinander sind und jeweils H, F oder Cl sind; und $n^{21}$ eine ganze Zahl von 0 bis 8 ist, worin die Vinylidenfluorideinheit 10,0 bis 49,9 Mol-% aller Monomereinheiten ausmacht, die das Fluorharz aufbauen, worin die Tetrafluorethyleneinheit 50,0 bis 85,0 Mol-% aller Monomereinheiten ausmacht, die das Fluorharz aufbauen, die ethylenisch ungesättigte Monomereinheit 0,1 bis 5,0 Mol-% aller Monomereinheiten ausmacht, die das Fluorharz aufbauen, wobei das Fluorharz einen Schmelzpunkt von 180-290°C hat und einen Gewichtsverlust von 0,1% oder weniger nach dem Erhitzen auf 300°C für zwei Stunden aufweist, wobei der Gewichtsverlust und der Schmelzpunkt gemäß den in der Beschreibung beschriebenen Verfahren bestimmt werden.

2. Formartikel, gebildet aus dem Fluorharz gemäß Anspruch 1.

**Revendications**

1. Résine fluorée comprenant un motif fluorure de vinylidène, un motif tétrafluoroéthylène et au moins un motif monomère à insaturation éthylénique sélectionné dans le groupe consistant en un monomère à insaturation éthylénique représenté par la formule (1) suivante :

$$CX^{11}X^{12}=CX^{13}(CX^{14}X^{15})_{r11}X^{16}$$

dans laquelle $X^{11}$ à $X^{16}$ sont identiques les uns aux autres ou différents les uns des autres, et sont chacun H, F, ou Cl ; et $n^{11}$ est un nombre entier allant de 0 à 8, à l'exclusion du tétrafluoroéthylène et du fluorure de vinylidène ; et un monomère à insaturation éthylénique représenté par la formule (2) suivante :

$$CX^{21}X^{22}=CX^{23}\text{-}O(CX^{24}X^{25})_{n21}X^{26}$$

dans laquelle $X^{21}$ à $X^{26}$ sont identiques les uns aux autres ou différents les uns des autres, et sont chacun H, F, ou Cl ; et $n^{21}$ est un nombre entier allant de 0 à 8,
le motif fluorure de vinylidène représentant 10,0 à 49,9% en mole de tous les motifs monomères constituant la résine fluorée,
le motif tétrafluoroéthylène représentant 50,0 à 85,0% en mole de tous les motifs monomères constituant la résine fluorée,
le motif monomère à insaturation éthylénique représentant 0,1 à 5,0 % en mole de tous les motifs monomères constituant la résine fluorée,
la résine fluorée présentant un point de fusion de 180 à 290 °C et présentant une perte de poids de 0,1 % ou moins après chauffage à 300 °C pendant deux heures, dans laquelle la perte de poids et le point de fusion sont déterminés selon les procédés décrits dans le mémoire.

2. Article moulé formé à partir de la résine fluorée selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010110129 A
- WO 2007082867 A2
- EP 2412735 A1
- EP 1270209 A1
- EP 0178935 A1